# EUROPÄISCHE PATENTSCHRIFT

(11) **EP 2 805 089 B1**
(45) Veröffentlichungstag und Bekanntmachung des Hinweises auf die Patenterteilung: **26.06.2019**
(21) Anmeldenummer: 13700614.4
(22) Anmeldetag: 10.01.2013
(51) Int. Cl.: F16K 11/044

(54) **SANITÄRARMATUR**
SANITARY FITTING
ROBINET SANITAIRE

(30) Priorität: 21.01.2012 DE 102012001215
(43) Veröffentlichungstag der Anmeldung: 26.11.2014
(73) Patentinhaber: Hansa Armaturen GmbH, 70567 Stuttgart (DE)
(72) Erfinder: ASSENMACHER, Bernd, 70597 Stuttgart (DE)
(74) Vertreter: Ostertag & Partner Patentanwälte mbB
(86) Internationale Anmeldenummer: PCT/EP2013/000042
(87) Internationale Veröffentlichungsnummer: WO 2013/107616

(56) Entgegenhaltungen:
- EP-A1- 1 367 184
- GB-A- 1 552 996
- GB-A- 2 416 019
- US-A- 4 503 877
- US-A- 5 608 928

## Beschreibung

Die Erfindung betrifft eine Sanitärarmatur mit
a) einem Gehäuse, in dem ein Wasserzulaufraum ausgebildet ist;
b) zwei Wasserabgängen, von denen mindestens einer rohrförmig ausgebildet ist und von dem Gehäuse abragt;
c) einer Umstelleinrichtung, mit welcher die Wasserströmung von dem Wasserzulaufraum des Gehäuses wahlweise auf einen der beiden Wasserabgänge leitbar ist und die umfasst:
   ca) einen Doppelventilkegel, der in einer ersten Endposition einen ersten Ventilsitz im Wasserweg zum ersten Wasserabgang und in einer zweiten
      Endposition einen zweiten Ventilsitz im Wasserweg zu einem zweiten Ventilsitz verschließt;
   cb) einen Ventilschaft, der mit dem Doppelventilkegel verbunden ist;
   cc) ein manuell betätigbares Betätigungsorgan, mit dem der Ventilschaft und damit der Doppelventilkegel in axialer Richtung bewegbar ist, wobei
   wobei
d) das Betätigungsorgan einen hülsenförmigen Bereich aufweist, der auf der Außenmantelfläche des rohrförmigen Wasserabgangs in axialer Richtung verschiebbar geführt ist;
e) eine Einrichtung vorgesehen ist, mit welcher eine Bewegung des hülsenförmigen Bereiches des Betätigungsorgans auf den Doppelventilkegel übertragbar ist.

Sanitärarmaturen dieser Art sind in so großer Vielzahl aus dem täglichen Gebrauch bekannt, dass ein druckschriftlicher Nachweis entbehrlich ist. Bei diesen umfasst die Umstelleinrichtung als Betätigungsorgan regelmäßig eine aus dem Gehäuse der Sanitärarmatur herausragende Betätigungsstange, an deren Ende im Allgemeinen ein das Ergreifen erleichternder Knopf oder dergleichen vorgesehen ist. Die Betätigungsstange steht direkt in Verbindung mit dem Ventilschaft, oder ist eine unmittelbare Verlängerung desselben. Diese Art der Betätigung wird von manchen Benutzern als nicht sehr bequem empfunden.

Außerdem schränkt sie in der Wahl des Designs der Sanitärarmatur ein. Ein weiterer Nachteil ist häufig eine komplizierte Innengeometrie des Gehäuses der Sanitärarmatur. Weniger gebräuchlich aber gleichwohl bekannt sind Umstelleinrichtungen, die über einen Ring an einem Brauseschlauch betätigt werden können. Der Brauseschlauch, der einen der beiden Wasserabgänge darstellt, bewegt sich beim Umstellen mit. Bei diesem Funktionsprinzip wird eine Dichtung mit großem Durchmesser benötigt, die zur Schwergängigkeit neigt. Dies sowie mögliche Querkräfte, die vom Brauseschlauch rühren, führen leicht zum Versagen der automatischen Rückstellung nach dem Abstellen des Wasserstroms.

Die Druckschrift GB 1 552 996 beschreibt eine umschaltbare Sanitärarmatur, bei der ein an der Außenseite eines rohrförmigen Körpers angeordnetes Betätigungsorgan hülsenförmig den Körper umschließt und auf der Außenmantelfläche des Körpers in axialer Richtung verschiebbar geführt ist. Das Betätigungsorgan koppelt mit einer Ventileinheit. Durch Verschieben des Betätigungsorgans nach unten gegen die Kraft zweier Federn öffnet sich das Ventil zu einem Brauseschlauchausgang, während das Ventil zu einem Badauslass geschlossen wird.

Aufgabe der vorliegenden Erfindung ist es, eine Sanitärarmatur der eingangs genannten Art zu schaffen, bei welcher die von Hand vorgenommene Umstellung leichtgängig und bequem und die automatische Rückstellung nach dem Abstellen des Wasserflusses sicher gewährleistet ist.

Diese Aufgabe wird erfindungsgemäß dadurch gelöst, dass
f) die bewegungsübertragende Einrichtung so ausgebildet ist, dass eine Bewegung des Betätigungsorgans in einer axialen Richtung in eine Bewegung des Doppelventilkegels in der entgegengesetzten axialen Richtung umgesetzt wird.

Bei dem erfindungsgemäß vorgesehenen, auf der Außenmantelfläche eines rohrförmigen Wasserabgangs geführten Betätigungsorgan hat der Benutzer eine große Angriffsfläche, so dass die Betätigung bequem ist. Die Führung des Betätigungsorganes auf der Außenmantelfläche des rohrförmigen Wasserabgangs kann problemlos leichtgängig gestaltet werden. Dies hat gleichzeitig zur Folge, dass auch eine automatische Rückstellung nach dem Ende des Wasserflusses fehlerfrei erfolgt. Dadurch, dass die bewegungsübertragende Einrichtung so ausgebildet ist, dass eine Bewegung des Betätigungsorgans in einer axialen Richtung in eine Bewegung des Doppelventilkegels in der entgegengesetzten axialen Richtung umgesetzt wird.

Bei einer bevorzugten Ausführungsform der Erfindung ist in dem rohrförmigen Wasserabgang ein Einsatz angeordnet, der einen den Ventilschaft bereichsweise aufnehmenden Innenraum und mindestens einen Teil des Wasserweges im rohrförmigen Wasserabgang bildenden Wasserkanal enthält. Dieser Einsatz vereinigt in sich die kompliziertesten Formen und lässt sich gleichwohl leicht als gesondertes, verhältnismäßig kleines Teil herstellen. Er sorgt für einen möglichst geringe Drosselung erfahrenden Wasserdurchfluss und nimmt gleichzeitig den Ventilschaft in dem Bereich auf, in dem die bewegungsverursachenden Kräfte an ihm angreifen.

Die bewegungsübertragende Einrichtung kann bei einem erklärenden Beispiel mindestens einen mit dem hülsenförmigen Bereich des Betätigungsorganes verbundenen speichenartig nach innen ragenden Bereich umfassen, der sich durch einen Schlitz des Einsatzes hindurch erstreckt und an seinem innenliegenden Ende mit dem Ventilschaft bewegungsschlüssig verbunden ist. Diese Art, die Bewegung des Betätigungsorganes auf den Doppelventilkegel zu übertragen, ist mechanisch besonders einfach und leicht herzustellen.

Zweckmässig dabei ist, wenn eine Mehrzahl von speichenartigen Bereichen vorgesehen ist, die sich an ihrem inneren Ende in einer Nabe vereinen, welche den Ventilschaft umgibt und mit diesem bewegungsschlüssig verbunden ist. Auf diese Weise wird die Kraft gleichmäßig, ohne die Gefahr des Verkantens, auf den Ventilschaft gebracht.

Dabei wiederum ist es günstig, wenn der Einsatz zwischen den Schlitzen jeweils mindestens einen Wasserkanal aufweist. Auf diese Weise wird der Raum, der innerhalb des Einsatzes zur Verfügung steht, optimal für Wasserdurchgänge genutzt und so die eintretende Drosselung gering gehalten.

Während die oben geschilderte Art, eine bewegungsübertragende Einrichtung auszugestalten, hauptsächlich für eine Ausführung in Metall geeignet ist, empfiehlt sich ein erklärendes Beispiel besonders für Kunststoff, bei welcher die bewegungsübertragende Einrichtung ein Mitnahmeteil umfasst, das mit dem Ventilschaft bewegungsschlüssig verbunden ist und mindestens einen radial nach außen stehenden Vorsprung aufweist, der mit mindestens einem radial nach innen weisenden Vorsprung an der Innenmantelfläche des hülsenförmigen Bereiches des Betätigungsorgans zusammenwirkt. Derartige Vorsprünge am Mitnahmeteil und am Betätigungsorgan lassen sich in Kunststoffspritztechnik kostengünstig herstellen.

Bevorzugt wird dabei, dass an dem Mitnahmeteil und an dem hülsenförmigen Bereich des Betätigungsorgans jeweils eine Mehrzahl von Vorsprüngen vorgesehen ist, die nach Art einer Bajonettverbindung in wechselseitigen Eingriff gebracht werden können. Die Vielzahl von miteinander zusammenwirkenden Vorsprüngen hat wiederum den Sinn, eine möglichst gleichmäßige, nicht zum Verkippen oder Verkanten neigende Art der Krafteinleitung zu bewirken. Die Anordnung der Vorsprünge derart, dass sie sich durch eine kombinierte Axial- und Azimutalbewegung wie ein Bajonettverschluss in Eingriff bringen lassen, erleichtert die Montage der Umstelleinrichtung.

Aus Raumgründen ist es günstig, wenn das Mitnahmeteil zumindest mit einem Bereich in einer Einbuchtung des Einsatzes angeordnet ist.

Die Führung des Mitnahmeteiles, das sich ja gegenüber dem Einsatz bewegen soll, ist besonders günstig, wenn das Mitnahmeteil mindestens einen die Außenmantelfläche des Einsatzes umgreifenden Flügel aufweist.

Wenn, wie oben geschildert, das Mitnahmeteil in einer Einbuchtung des Einsatzes angeordnet ist, dann wird das verbleibende Volumen des Einsatzes besonders gut für die Wasserdurchführung ausgenutzt, wenn der Einsatz einen im Querschnitt bogenförmigen, die Einbuchtung umgreifenden Wasserkanal aufweist.

Alle oben angesprochenen erklärenden Beispiele zeichneten sich dadurch aus, dass die Bewegung des Betätigungsorganes in entgegengesetzter Richtung zu derjenigen Richtung erfolgen muss, in welcher das Wasser geleitet werden soll. Da dies nicht für jeden Benutzer intuitiv ist, wird bei der Erfindung umgesetzt, dass die bewegungsübertragende Einrichtung so ausgebildet ist, dass eine Bewegung des Betätigungsorgans in einer axialen Richtung in eine Bewegung des Doppelventilkegels in der entgegengesetzten axialen Richtung umgesetzt wird. In diesem Falle hat also die Bewegung des Betätigungsorgans in eine bestimmte Richtung zur Folge, dass das Wasser auch in dieser Richtung geführt wird.

Eine Ausführungsform für eine derartige, die Bewegungsrichtung umkehrende bewegungsübertragende Einrichtung sieht so aus, dass diese mindestens ein in einem Schlitz des Einsatzes gelagertes Zahnrad umfasst, das einerseits mit einer mit dem Ventilschaft verbundenen Zahnung und andererseits mit einer mit dem Betätigungsorgan verbundenen Zahnung kämmt.

Unter dem Gesichtspunkt der gleichmäßigen, verkippungsfreien Kräfteeinleitung ist es auch hier günstig, wenn eine Mehrzahl von Zahnrädern vorgesehen ist, wobei zwischen den entsprechenden Schlitzen des Einsatzes jeweils mindestens ein Wasserkanal verläuft.

Ausführungsbeispiele der Erfindung werden nachstehend anhand der Zeichnung unter Bezugnahme auf die figuren 7-10 näher erläutert; es zeigen
- Figur 1: einen Schnitt durch einen Teil einer als erklärendes Beispiel dienenden Sanitärarmatur mit Umstelleinrichtung gemäß der abgewinkelten Linie I-I von Figur 3, wobei der Doppelventilkegel der Umstelleinrichtung sich in einer seiner beiden Endstellungen befindet;
- Figur 2: einen Schnitt, ähnlich der Figur 1, in dem sich jedoch der Doppelventilkegel in seiner anderen Endstellung befindet;
- Figur 3: einen Schnitt gemäß Linie III-III von Figur 1;
- Figur 4: einen Schnitt, ähnlich der Figur1, jedoch entlang der geraden Schnittlinie IV-IV von Figur 6, durch eine Sanitärarmatur mit einem alternativen erlärenden Beispiel einer Umstelleinrichtung, wobei sich der Doppelventilkegel in seiner ersten Endposition befindet;
- Figur 5: einen Schnitt, ähnlich der Figur 4, in der sich jedoch der Doppelventilkegel in seiner anderen Endposition befindet;
- Figur 6: einen Schnitt gemäß Linie VI-VI von Figur 4;
- Figur 7: einen Schnitt, ähnlich der Figur 1 entlang der Linie VII-VII der Figur 9, durch eine Sanitärarmatur mit einem erfindungsgemäßen Ausführungsbeispiel einer Umstelleinrichtung, wobei sich der Doppelventilkegel in seiner ersten Position befindet;
- Figur 8: einen Schnitt, ähnlich der Figur 7, in dem sich der Doppelventilkegel jedoch in seiner anderen Endposition befindet;
- Figur 9: einen Schnitt gemäß Linie IX-IX von Figur 7;
- Figur 10: eine Wannenfüllarmatur, teilweise im Schnitt, bei der sich die Umstelleinrichtung in dem zu einem Brauseschlauch führenden Wasserabgang befindet.

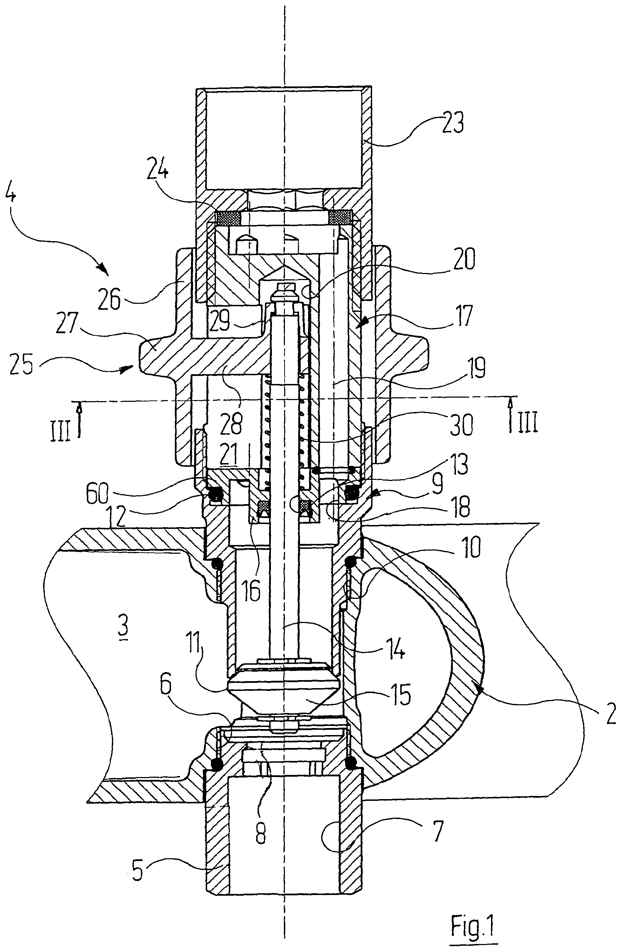

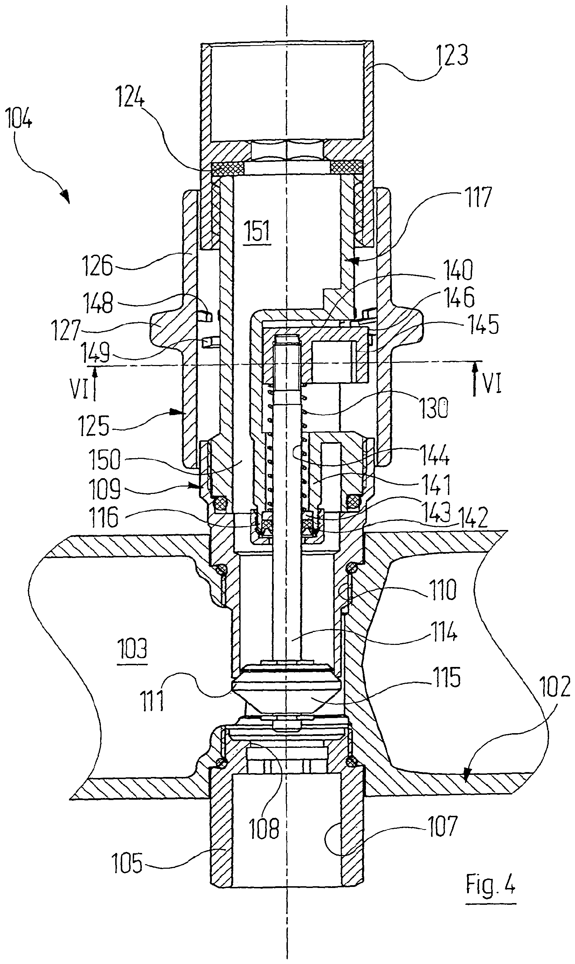

Zunächst wird auf die Figur 1 bis Figur 3 Bezug genommen. Dort ist, teilweise im Schnitt, ein Bereich eines Gehäuses 2 einer Sanitärarmatur dargestellt. Die Art der Sanitärarmatur ist bei diesem erklärenden Beispiel ebenso wie bei den weiter unten anhand der Figur 4 bis Figur 9 beschriebenen gleichgültig. Es genügt zu wissen, dass in dem Gehäuse 2 ein Wasserzulaufraum 3 ausgebildet ist, über den, beispielsweise von einem Misch- oder Thermostatventil kommend, Wasser der Umstelleinrichtung zugeführt wird, die insgesamt mit dem Bezugszeichen 4 gekennzeichnet ist. Mit Hilfe der Umstelleinrichtung 4 ist es möglich, das über den Wasserzulaufraum 3 zuströmende Wasser wahlweise auf einen von zwei Wasserabgängen zu leiten.

In demr dargestellten erklärenden Beispiel wird der erste Wasserabgang durch einen Anschlussnippel 5 gebildet, der von unten her in eine Gewindebohrung 6 des Gehäuses 2 eingeschraubt ist. Der Anschlussnippel 5 kann beispielsweise mit dem Schlauch einer Handbrause verbunden werden. In der mehrfach abgestuften Innenbohrung 7 des Anschlussnippels 5 ist ein erster Ventilsitz 8 ausgebildet.

Der zweite Wasserabgang liegt dem ersten, durch den Anschlussnippel 5 gebildeten Wasserabgang koaxial diametral gegenüber. Er umfasst ein Umstellventilgehäuse 9, welches in eine zweite Gewindebohrung 10 des Gehäuses 2 eingeschraubt ist. Bei dem Umstellventilgehäuse 9 handelt es sich um ein hohlzylinderisches, an der Innen- und Außenmantelfläche mehrfach abgestuftes Gebilde. Der untere Rand des Umstellventilgehäuses 9 bildet einen zweiten Ventilsitz 11. Von oben her ist in das Umstellventilgehäuse 9 ein Zwischenteil 60 eingeführt, das mit seinem unteren Rand auf einer Stufe der Innenmantelfläche des Umstellventilgehäuses 9 aufliegt. Zwischen dem Zwischenteil 60 und dem Umstellventilgehäuse 9 liegt eine O-Ring-Dichtung 12, welche den Austritt von Wasser an dieser Stelle verhindert. Das Zwischenteil 60 besitzt eine mittlere Durchgangsbohrung 13, die koaxial zu dem Anschlussnippel 5, den Gehäusebohrungen 6 und 10 sowie dem Umstellventilgehäuse 9 ist. Durch die Durchgangsbohrung 13 erstreckt sich, wiederum koaxial, ein Ventilschaft 14, an dessen unterem Ende ein Doppelventilkegel 15 befestigt ist. Zwischen dem Ventilschaft 14 und der Durchgangsbohrung 13 des Zwischenteiles 11 liegt eine Formdichtung 16 .

Oberhalb des Zwischenteiles 60 ist ein Einsatz 17 in den oberen Endbereich des Umstellventilgehäuses 9 eingeschraubt. Mehrere außermittige Öffnungen 18 im Zwischenteil 60 stehen mit entsprechend vielen achsparallelen Kanälen 19 im Einsatz 17 in Verbindung, die in die obere Stirnseite des Einsatzes 17 münden. An den Strömungsübergängen vom Zwischenstück 60 zum Einsatz 17 befindet sich jeweils eine nicht mit Bezugszeichen versehene O-Ringdichtung.

Eine Mittelbohrung 20 des Einsatzes 17 nimmt den oberen Bereich des Ventilschaftes 14 auf.

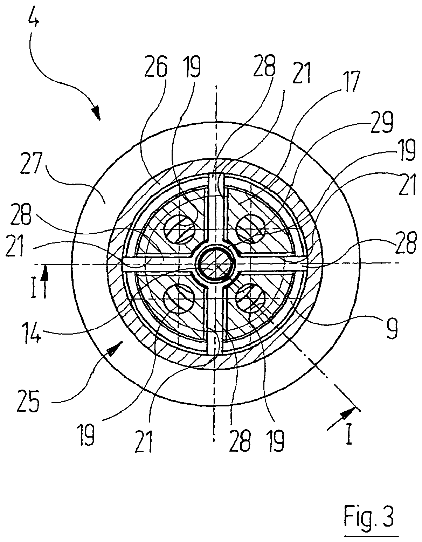

Wie insbesondere der Figur 3 zu entnehmen ist, verlaufen durch den Einsatz 17 außer den vier achsparallelen Kanälen 19 vier Schlitze 21 von der Außenmantelfläche bis zur Mittelbohrung 20, die jeweils zwischen zwei benachbarten Kanälen 19 liegen und mit einander rechte Winkel einschließen. Die Schlitze 21 verlaufen nicht über die gesamte axiale Abmessung des Einsatzes 17 sondern enden, wie der Figur 1 zu entnehmen ist, in einem gewissen Abstand von dessen oberer Stirnseite.

Auf den oberen Endbereich des Einsatzes 17 ist ein zweiter Anschlussnippel 23 aufgeschraubt, der beispielsweise mit einer zu einer Kopfbrause führenden starren oder flexiblen Brauseleitung verbunden werden kann. Zwischen dem zweiten Anschlussnippel 23 und der oberen Stirnseite des Einsatzes 17 liegt eine Flachdichtung 24.

Die Anordnung aus Umstellventilgehäuses 9, Anschlussnippel 23 und ggfs. dem zwischenliegenden Einsatz 17 stellt in der Terminologie der Anspruche einen "rohrförmigen Wasserabgang" dar.

Die Umstelleinrichtung 4 umfasst ein Betätigungsorgan 25 mit einem äußeren, hülsenförmigen Bereich 26, auf dessen äußerer Mantelfläche ein die Bedienung erleichternder, radial vorspringender Ringbund 27 angeformt ist. Der Innenradius des hülsenförmigen Bereiches 26 stimmt einerseits mit dem Außenradius des Umstellventilgehäuses 9 und andererseits mit dem Außenradius des zweiten Anschlussnippels 23 überein. Die axiale Länge des hülsenförmigen Bereiches 26 ist so groß, dass in keiner Stellung, die das Betätigungsorgan 25 einnehmen kann, der Spalt zwischen dem oberen Rand des Umstellventilgehäuses 9 und dem unteren Rand des zweiten Anschlussnippels 23 auch nur teilweise freigegeben wird.

An die Innenmantelfläche des hülsenförmigen Bereichs 26 sind vier speichenartige Bereiche 28 angeformt, die unter einander rechte Winkel einschließen und sich durch die Schlitze 21 des Einsatzes 17 hindurch erstrecken. Alle speichenartige Bereiche 28 führen zu einer mittleren Nabe 29, in der das obere Ende des Ventilschaftes 14 befestigt ist. Die Nabe 29 findet in der Mittelbohrung 20 des Einsatzes 17 Platz.

Zwischen der Unterseite der Nabe 29 und einer Stufe der Durchgangsbohrung 13 des Zwischeteils 60 erstreckt sich eine Druckfeder 30.

Die Funktion der oben beschriebenen Umstelleinrichtung 4 ist wie folgt:
Die aus dem Detätigungsorgan 25, dem Ventilschaft 14 und dem Doppelventilkegel 15 bestehende Baugruppe nimmt normalerweise, d.h. ohne Einwirkung von äußeren Kräften, eine Vorzugsstellung ein, die in Figur 1 dargestellt ist. In dieser Vorzugsstellung schiebt die Druckfeder 30 das Betätigungsorgan 25 so weit wie möglich nach oben, bis die Obserseite des Doppelventilkegels 15 an dem zweiten Ventilsitz 11 anliegt. In dieser Position ist somit der Wasserweg zum zweiten Anschlussnippel 23 verschlossen, während der Wasserweg aus dem Wasserzulaufraum 3 zum ersten Anschlussnippel 5 freigegeben ist.

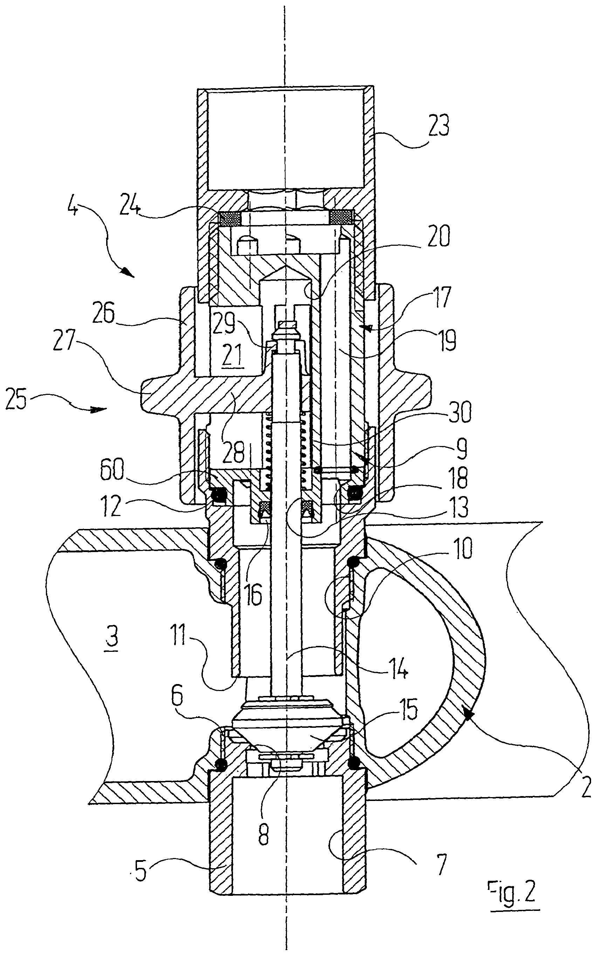

Wünscht der Benutzer die Umleitung des Wassers zum zweiten Anschlussnippel 23, so greift er an dem hülsenförmigen Bereich 26 mit dem Ringbund 27 an und verschiebt diesen hülsenförmigen Bereich 26 auf den Außenflächen des zweiten Anschlussnippels 23 und des Umstellventilgehäuses 9 nach unten. Dabei wird aufgrund der speichenförmigen Bereiche 28 und der Nabe 29 der Ventilschaft 14 ebenfalls nach unten verschoben, wobei die Druckfeder 30 komprimiert wird. Die nach unten gerichtete Bewegung findet ihr Ende, wenn, wie in Figur 2 dargestellt ist, die Unterseite des Doppelventilkegels 15 an dem ersten Ventilsitz 8 im ersten Anschlussnippel 5 anliegt.

Die Kraft der Druckfeder 30 ist so bemessen, dass der Benutzer nunmehr das Betätigungsorgan 25 loslassen kann. Der Wasserdruck, der auf die Oberseite des Doppelventilkegels 15 wirkt, reicht aus, den Doppelventilkegel 15 entgegen der Kraft der Feder 30 in Anlage an dem ersten Ventilsitz 8 zu halten. Das Wasser strömt nunmehr durch den Innenraum des Umstellventilgehäuses 9, durch die vier Öffnungen 18 im Zwischenteil 60, durch die vier Kanäle 19 im Einsatz 17 und schließlich durch das Innere des zweiten Anschlussnippels 23 zu der mit diesem verbundenen Kopfbrause.

Eine erneute Umstellung des Wasserstromes auf den ersten Anschlussnippel 5 ist dadurch möglich, dass der Benutzer mit einer ausreichend großen Kraft, welche gemeinsam mit der Kraft der Feder 30 den auf den Doppelventilkegel 15 wirkenden Wasserdruck überwindet, das Betätigungsorgan 25 nach oben schiebt. Alternativ kehrt der Doppelventilkegel 15 automatisch in die Figur 1 dargestellte Position unter der Wirkung der Feder 30 zurück, wenn mit Hilfe eines nicht dargestellten Ventils der Wasserstrom durch den Wasserzulaufraum 3 abgestellt wird und somit der auf die Oberseite des Doppelventilkegels 15 wirkende Wasserdruck wegfällt.

Die oben anhand der Figur 1 bis Figur 3 beschriebene Art der Umstelleinrichtung 4 eignet sich besonders zur Herstellung aus Metall. In den Figuren 4 bis 6 ist eine alternative Ausführungsform dargestellt, die besonders gut aus Kunststoff herstellbar ist und nachfolgend beschrieben wird. Viele Teile dieser zweiten Ausführungsform entsprechen solchen der ersten. Sie werden daher mit demselben Bezugszeichen zuzüglich 100 gekennzeichnet und nicht mehr oder nicht mehr detailliert beschrieben.

In identischer Weise wie in den Figuren 1 bis 3 finden sich in den Figuren 4 bis 6 das Armaturengehäuse 102 mit dem Wasserzuführraum 103, der erste Wasserabgang in Form des ersten Anschlussnippels 105, der zweite Wasserabgang in Form des Umstellventilgehäuses 109 und des zweiten Anschlussnippels 123 und der über einen Ventilschaft 114 zwischen einem ersten Ventilsitz 108 und einem zweiten Ventilsitz 111 bewegbare Doppelventilkegel 115. Anders ausgebildet beim zweiten erklärenden Beispiel ist die Art und Weise, wie die Axialbewegung des Betätigungsorganes 125 auf den Ventilschaft 114 übertragen wird, sowie die Ausgestaltung des Einsatzes 117. Die hierzu beim zweiten erklärenden Beispiel gegenüber dem ersten vorgenommenen Änderungen werden weiter unten beschrieben. Ein besonderes Mitnahmeteil 145, das ebenfalls nachfolgend erläutert wird, sorgt für eine Bewegungsvermittlung zwischen dem Betätigungsorgan 125 und dem Ventilschaft 114.

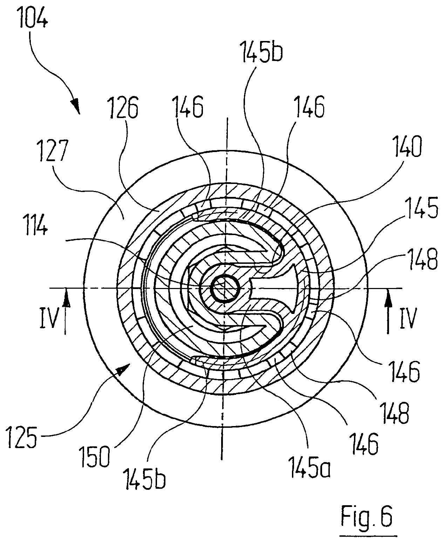

Zunächst seien die Änderungen an dem Einsatz 117 erläutert. Dieser hat eine hohle zylindrische Grundform, wobei, wie insbesondere der Figur 6 zu entnehmen ist, von einer Seite her und über eine gewisse axiale Abmessung hinweg eine im Querschnitt U-förmige Einbuchtung 140 vorgesehen ist, die bis über die Achse des Einsatzes 117 hinausreicht. Von der unteren radial verlaufenden Begrenzungswand der Einbuchtung 140 erstreckt sich koaxial nach unten ein hohlzylindrischer Kragen 141, auf den von unten über korrespondierende Gewinde, die nicht eigens mit Bezugszeichen versehen sind, ein becherförmiges, nach oben offenes Schraubteil 142 aufgeschraubt ist. Das Schraubteil 142 hält eine Formdichtung 116 sowie eine darüberliegende Ringscheibe 143 in einer Erweiterung des Innenraumes 144 des Kragens 141.

Das obere Ende des Ventilschaftes 114 ragt in die Einbuchtung 140 hinein und ist dort in das oben schon erwähnte Mitnahmeteil 145 eingeschraubt. Zwischen der unteren Fläche des Mitnahmeteils 145 und der Scheibe 143 erstreckt sich eine Druckfeder 130.

Wie insbesondere der Figur 6 zu entnehmen ist, besitzt das Mitnahmeteil 145 einen sich radial erstreckenden Bereich 145a, in welchem der Ventilschaft 114 verschraubt ist und dessen Kontur im Schnitt der Figur 6 an die Kontur der Einbuchtung 140 angepasst ist, sowie zwei seitliche, kreisbogenförmige Flügel 145b, welche die äußere Mantelfläche des Einsatzes 117 teilweise übergreifen. Die Anordnung ist so, dass das Mitnahmeteil 145 axial innerhalb des Einsatzes 117 verschoben werden kann und dabei aufgrund seiner Formgebung an dem Einsatz 117 geführt ist.

Am oberen Rand der äußeren, teilzylindrischen Mantelfläche des Mitnahmeteils 145 ist eine Mehrzahl von radial vorstehenden Vorsprüngen 146 in gleichmäßigen Abständen angeformt, deren Bedeutung weiter unten deutlich wird.

An der Innenmantelfläche des hülsenförmigen Bereiches 126 des Betätigungsorganes 125 sind in axialem Abstand voneinander, also in zwei axial gegeneinander versetzten Ebenen, zwei Reihen von nach innen ragenden Vorsprüngen 148, 149 angeformt. Die Vorsprünge 149 in der unteren Ebene sind gegenüber den Vorsprüngen 148 in der oberen Ebene winkelmäßig so versetzt, dass sie "auf Lücke" stehen. Der Abstand zwischen benachbarten Vorsprüngen 148, 149 in derselben Ebene ist so gewählt, dass jeweils ein Vorsprung 147 des Mitnahmeteiles 145 in einer entsprechenden Drehstellung des Betätigungsorganes 125 in axialer Richtung passieren kann. Die Montage des Mitnahmeteils 145 am Betätigungsorgan 125 kann also nach Art eines Bajonettverschlusses dadurch erfolgen, dass zunächst in einer Axialbewegung die Vorsprünge 146 des Mitnahmeteils 145 durch die Spalte zwischen den Vorsprüngen 148 oder 149 geführt werden und sodann das Betätigungsorgan 125 etwas gegenüber dem Mitnahmeteil 145 verdreht wird.

Der Einsatz 117 besitzt einen kreisbogenförmigen Verbindungskanal 150, der von seiner unteren Stirnseite bis in den im Querschnitt kreisförmigen Innenraum 151 reicht, der im oberhalb der Einbuchtung 140 liegenden Bereich des Einsatzes 117 gebildet ist.

Die Funktionsweise der Umstelleinrichtung 104 ist wie folgt:
Die Vorzugsposition, welche der Doppelventilkegel 115 ohne Einwirkung äußerer Kräfte einnimmt, ist in Figur 4 dargestellt. Hier drückt die Druckfeder 130 das Mitnahmeteil 145 nach oben, wodurch der mit dem Mitnahmeteil 145 über den Ventilschaft 114 verbundene Doppelventilkegel 115 sich an den oberen, zweiten Ventilsitz 111 anlegt.

Aufgrund der Mitnahmeverbindung, die durch die Vorsprünge 146 des Mitnahmeteiles 145 und die Vorsprünge 148, 149 des Betätigungsorganes 125 gebildet ist, wird auch das Betätigungsorgan 125 nach oben verschoben, wobei es auf den Außenmantelflächen des Umstellventilgehäuses 109 und des zweiten Anschlussnippels 123 gleitet.

Wünscht der Benutzer bei strömendem Wasser dieses auf den ersten Anschlussnippel 105 zu leiten, so drückt er das Betätigungsorgan 125 nach unten, indem er an dem hülsenförmigen Bereich 126 und dem Ringbund 127 angreift. Der wechselseitige Eingriff der Vorsprünge 146 des Mitnahmeteiles 145 und der Vorsprünge 148, 149 des Betätigungsorganes 125 sorgt dafür, dass das Mitnahmeteil 145 der Verschiebung des Betätigungsorganes 125 nach unten folgt, wodurch der Doppelventilkegel 115 über den Ventilschaft 114 unter Kompression der Druckfeder 130 nach unten gegen den ersten Ventilsitz 106 gelegt wird. Nunmehr strömt das Wasser nach oben in den Innenraum des Umstellventilgehäuses 109, durch den kreisbogenförmigen Verbindungskanal 150 und den Innenraum 151 des Einsatzes 117 zum zweiten Anschlussnippel 123. Wird das Wasser abgestellt, kehrt der Doppelventilkegel 115 unter der Wirkung der Druckfeder 130 wieder in seine Vorzugsstellung zurück, in welcher er am zweiten Ventilsitz 111 anliegt.

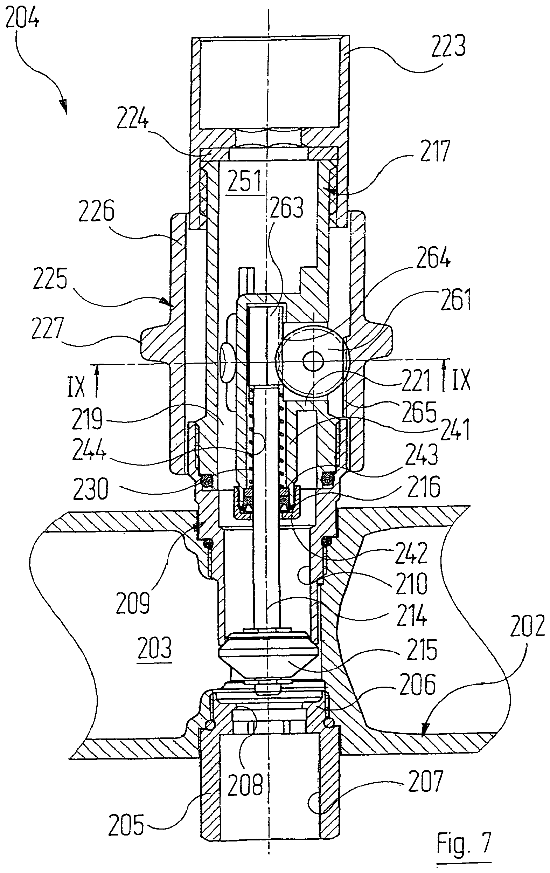

Bei den oben beschriebenen beiden erklärenden Beispielen waren die Verhältnisse so, dass der Benutzer das Betätigungsorgan nach unten drücken musste, wenn er eine Wasserzufuhr zum oberen Abgang, also zum oberen Anschlussnippel 23 bzw. 123 wünschte. Die Betätigungsweise wird manchmal als nicht intuitiv empfunden. Bei der nachfolgend anhand der Figur 7 bis Figur 9 beschriebenen erfindungsgemäßen Ausführungsform sorgt eine Bewegungsumkehr zwischen dem Betätigungsorgan und dem Doppelventilkegel dafür, dass die Richtung, in welcher das Betätigungsorgan sich bewegt, gleichzeitig die Richtung ist, in welcher der Wasserstrom umgelenkt wird.

Auch das Ausführungsbeispiel der Figur 7 bis Figur 9 ähnelt weitgehend den beiden zuvor beschriebenen; entsprechende Teile sind daher mit demselben Bezugszeichen, erneut um 100 erhöht, gekennzeichnet.

Identisch wie in den vorhergehenden erklärenden Beispielen sind das Armaturengehäuse 202 mit dem Wasserzuführraum 203, die Anschlussnippel 205 und 223, das Umstellventilgehäuse 209 und der Doppelventilkegel 215. Modifikationen gibt es hauptsächlich im Bereich des Betätigungsorganes 225 sowie des Einsatzes 217; sie werden nachfolgend beschrieben.

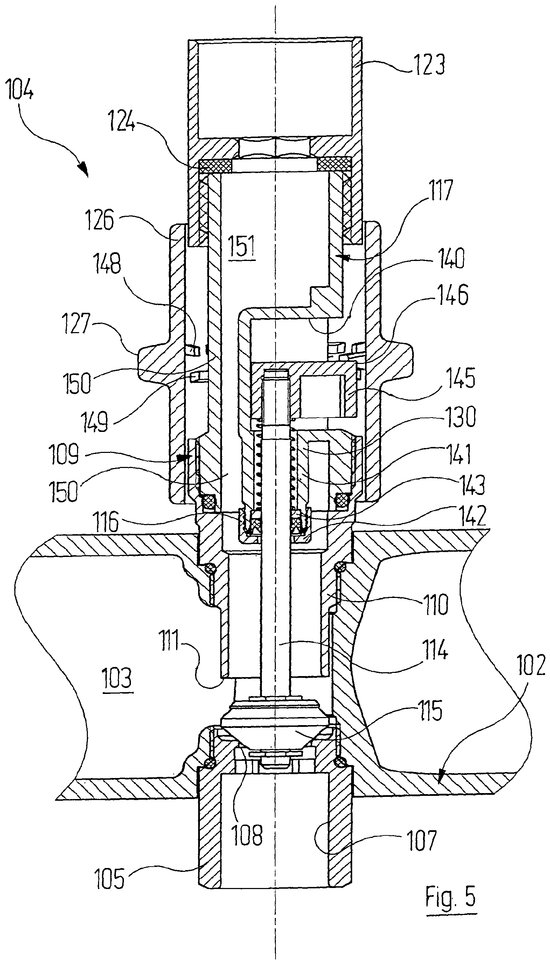

Was den Einsatz 217 angeht, so ähnelt er dem Einsatz 117 des zweiten Beispiels insofern, als auch er einen zylindrischen Kragen 241 mit einem Innenraum 244 besitzt, durch welche sich der Ventilschaft 214 zum Doppelventilkegel 215 erstreckt. Das auf das untere Ende des Kragens 241 aufgeschraubte Schraubteil 242, die von diesem in dem Innenraum 244 gehaltene Formdichtung 216 und die Ringscheibe 243 sind identisch wie in den Figur 4 und Figur 5. Ähnlich wie beim ersten Beispiel weist der Einsatz 217 mehrere achsparallele Kanäle 219 auf, die von der unteren Stirnfläche des Einsatzes 217 in einen erweiterten Innenraum 251 im oberen Bereich des Einsatzes 217 führen, der seinerseits mit dem zweiten Anschlussnippel 223 kommuniziert.

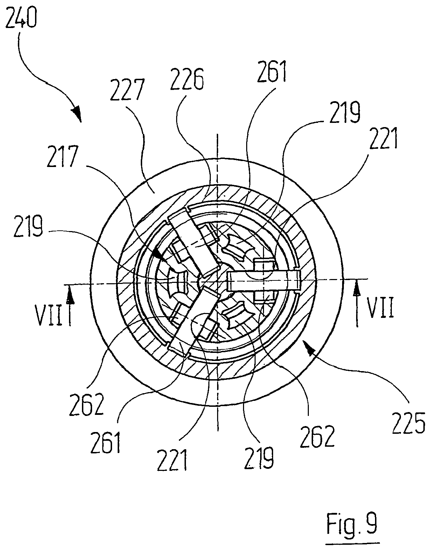

Wie insbesondere der Figur 9 zu entnehmen ist, sind von der Mantelfläche des Einsatzes 217 aus drei Schlitze 221 in einem Winkelabstand von jeweils 120° bis in den Innenraum 244 des Kragens 241 geführt. In diesen Schlitzen 221 ist jeweils ein Zahnrad 261 angeordnet und mittels einer kurzen Welle 262, die in entsprechende Ausnehmungen des Einsatzes 217 eingreift, drehbar gelagert.

Das obere Ende des Ventilschafts 214 trägt einen Kopf 263, der an seiner Mantelfläche in einem Winkelabstand von 120° jeweils Verzahnungen 264 aufweist. Die Verzahnungen 264 verlaufen achsparallel und kämmen jeweils mit einem der Zahnräder 261.

Auch die Innenmantelfläche des hülsenförmigen Bereiches 226 des Betätigungsorganes 225 ist in Winkelabständen von 120° mit Verzahnungen 265 versehen, die achsparallel verlaufen und ebenfalls mit jeweils einem der drei Zahnräder 261 kämmen.

Die Funktionsweise der Umstelleinrichtung 204 der Figur 7 bis Figur 9 ist wie folgt:
Die Vorzugsstellung, die von dem Doppelventilkegel 215 eingenommen wird, ist wiederum diejenige, in welcher er am zweiten Ventilsitz 211 anliegt. Dies ist in Figur 7 gezeigt. Der Doppelventilkegel 215 wird durch die Druckfeder 230 in diese Position gedrückt, die sich unten an der Ringscheibe 243 und oben an der Unterseite des Kopfes 263 abstützt. Der Kopf 263 befindet sich dabei in seiner obersten Position, die er in dem Innenraum 244 des Kragens 241 einnehmen kann. Das Betätigungsorgan 225 dagegen nimmt seine unterste Position ein. Strömt nunmehr Wasser über den Wasserzulaufraum 203 in die Umstelleinrichtung 204 ein, so strömt das Wasser durch den ersten Anschlussnippel 205 aus, beispielsweise zu einer Handbrause.

Wünscht der Benutzer, die Wasserströmung zum unteren Anschlussnippel 205 zu beenden und stattdessen Wasser über den oberen Anschlussnippel 223 beispielsweise zu einer Kopfbrause zu leiten, so zieht er das Betätigungsorgan 225 durch Angreifen an dem hülsenförmigen Bereich 226 und dem Ringbund 227 nach oben. Dies ist die Richtung, in welcher er die Strömung des Wassers wünscht; sie entspricht somit der Intuition des Benutzers. Bei der Bewegung des Betätigungsorganes 225 nach oben kommt es aufgrund des Kämmens der Zahnräder 261 mit den Verzahnungen 265 zu einer Drehung der Zahnräder 261. In der Darstellung der Figur 7 wird das Zahnrad 261 gegen den Uhrzeigersinn gedreht. Da die Zahnräder 261 mit den Verzahnungen 264 auf dem Kopf 263 des Ventilschaftes 214 kämmen, werden der Ventilschaft 214 und damit der Doppelventilkegel 215 nach unten bewegt. Diese Bewegung nach unten geschieht so weit, bis der Doppelventilkegel 215 sich mit seiner Unterseite an den ersten Ventilsitz 208 angelegt hat. Nunmehr ist der Wasserstrom zum ersten Anschlussnippel 205 und damit zur Handbrause gestoppt, während der zweite Ventilsitz 211 freigegeben ist. Das Wasser kann jetzt durch den Innenraum des Umstellventilgehäuses 209 und durch die Kanäle 219 des Einsatzes 217 nach oben zum zweiten Anschlussnippel 223 fließen.

Diese Position des Doppelventilkegels 215 wird aufgrund des auf ihn wirkenden Wasserdruckes beibehalten, auch wenn der Benutzer das Betätigungsorgan 225 loslässt, wie dies auch bei den beiden ersten Ausführungsbeispielen der Fall war und allgemein üblich ist.

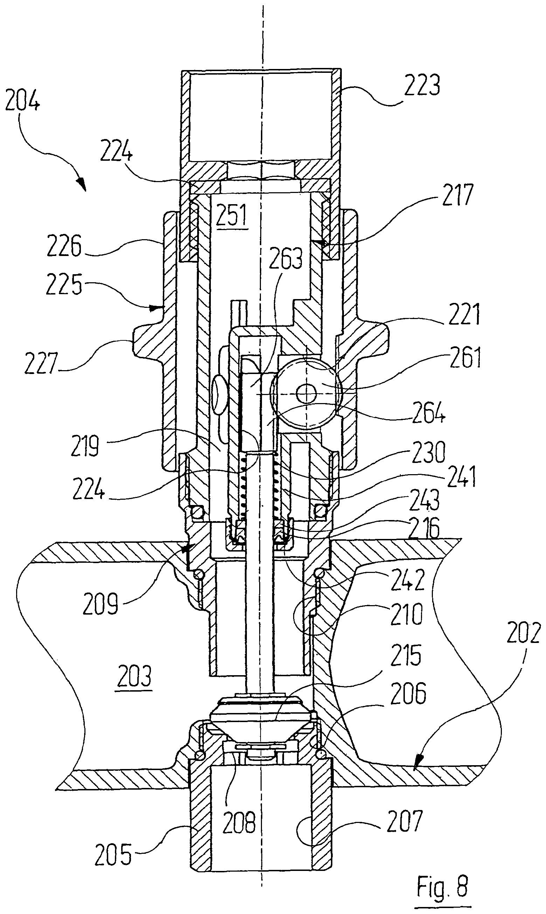

Will der Benutzer die Wasserströmung wieder zum unteren Abgang, also zum ersten Anschlussnippel 205 lenken, so drückt er das Betätigungsorgan 225 nach unten, also in die Richtung, in der er die Wasserströmung wünscht. Aufgrund der Bewegungsumkehr, welche durch die mit den Verzahnungen 264, 265 kämmenden Zahnräder 261 bewirkt wird, bewegt sich der Doppelventilkegel 215 wieder nach oben, bis er am oberen Ventilsitz 211 anliegt. Eine ähnliche Bewegung durchläuft der Doppelventilkegel 215 ausgehend von der in Figur 8 dargestellten Position auch dann von selbst, wenn die Wasserströmung abgestellt wird. Dann fällt der auf seine Oberseite wirkende Wasserdruck weg, so dass die Kraft der Druckfeder 230 ausreicht, den Doppelventilkegel 215 nach oben gegen den zweiten Ventilsitz 211 zu legen, wobei sich automatisch durch Vermittlung der Zahnräder 221 das Betätigungsorgan 225 wieder nach oben schiebt.

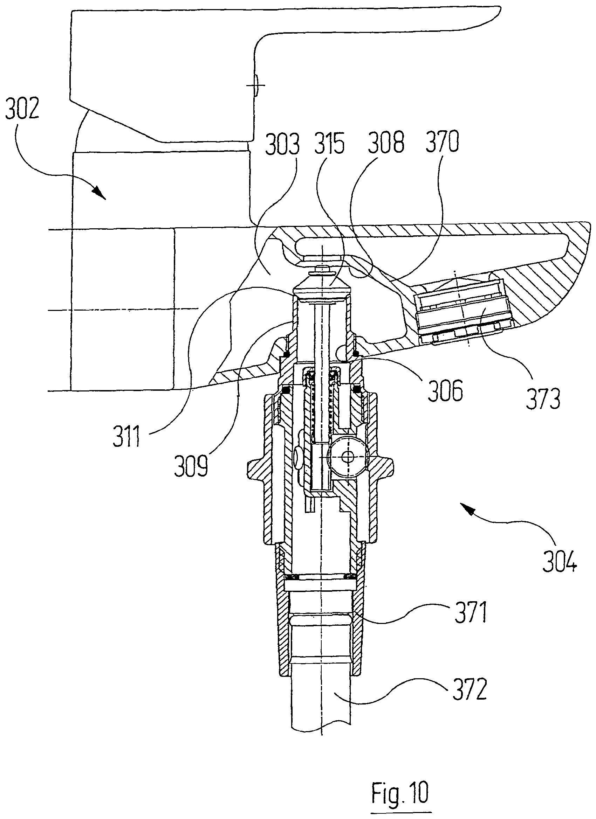

Bei den oben beschriebenen Ausführungsbeispielen befand sich die Umstelleinrichtung jeweils in einem von dem Gehäuse nach oben, beispielsweise zu einer Kopfbrause führenden Wasserabgang. In Figur 10 ist ein Ausführungsbeispiel gezeigt, bei dem dies anders ist. In dieser Figur sind Komponenten, die mit solchen des Ausführungsbeispiels der Figur 7 bis Figur 9 übereinstimmen, mit denselben Bezugszeichen erneut zuzüglich 100 gekennzeichnet.

Das Ausführungsbeispiel der Figur 10 enthält eine Umstelleinrichtung 304, die identisch mit der Umstelleinrichtung der Figur 6 bis Figur 9 übereinstimmt und daher nicht mehr beschrieben wird. Diese Umstelleinrichtung 304 ist nunmehr "kopfüber", also gegenüber den Figuren 6 bis 9 um 180° verdreht, an Stelle des ersten Anschlussnippels in eine untere Gewindebohrung 306 des Gehäuses 302 der dargestellten Wannenfüllarmatur eingeschraubt. Auf das gegenüberliegende, jetzt nach unten zeigende Ende der Umstelleinrichtung 304 ist statt des zweiten Anschlussnippels eine Brauseschlauchhülse 371 aufgeschraubt, an welcher ein Brauseschlauch 372 befestigt ist.

Der Doppelventilkegel 315 wirkt einerseits mit dem Ventilsitz 311 am oberen Rand des Umstellventilgehäuses 309 und andererseits mit einem Ventilsitz 308 zusammen, der an einer den Wasserzulaufraum 303 durchquerenden Zwischenwand 370 des Gehäuses 302 ausgebildet ist.

Die Bewegung des Doppelventilkegels 315 zwischen den beiden Ventilsitzen 308 und 311 geschieht in exakt derselben Weise wie beim Ausführungsbeispiel der Figuren 6 bis 9. Je nach Position des Doppelventilkegels 315 strömt das Wasser aus dem Wasserzuführraum 303 zur Handbrause oder über einen im vorderen Bereich des Gehäuses 302 vorgesehenen Luftsprudler 373 zur Badewanne.

## Patentansprüche

1. Sanitärarmatur mit
a) einem Gehäuse, in dem ein Wasserzulaufraum ausgebildet ist;
b) zwei Wasserabgängen, von denen mindestens einer rohrförmig ausgebildet ist und von dem Gehäuse abragt;
c) einer Umstelleinrichtung, mit welcher die Wasserströmung von dem Wasserzulaufraum des Gehäuses wahlweise auf einen der beiden Wasserabgänge leitbar ist und die umfasst:
ca) einen Doppelventilkegel, der in einer ersten Endposition einen ersten Ventilsitz im Wasserweg zum ersten Wasserabgang und in einer zweiten Endposition einen zweiten Ventilsitz im Wasserweg zum zweiten Wasserabgang verschließt;
cb) einen Ventilschaft, der mit dem Doppelventilkegel verbunden ist;
cc) ein manuell bedienbares Betätigungsorgan, mit dem der Ventilschaft und damit der Doppelventilkegel in axialer Richtung bewegbar sind; wobei
d) das Betätigungsorgan (25 ; 125 ; 225) einen hülsenförmigen Bereich (26 ; 126 ; 226) aufweist, der auf der Außenmantelfläche des rohrförmigen Wasserabgangs (9, 23 ; 109, 123 ; 209, 223) in axialer Richtung verschiebbar geführt ist;
e) eine Einrichtung (28, 29 ; 145, 146, 148, 149 ; 261, 263, 264, 265) vorgesehen ist, mit welcher eine Bewegung des hülsenförmigen Bereiches (26 ; 126 ; 226) des Betätigungsorgans (25 ; 125 ; 225) auf den Doppelventilkegel (15 ; 115 ; 215) übertragbar ist
**dadurch gekennzeichnet, dass**
f) die bewegungsübertragende Einrichtung (261, 263, 264, 265) so ausgebildet ist, dass eine Bewegung des Betätigungsorgans (225) in einer axialen Richtung in eine Bewegung des Doppelventilkegels (215) in der entgegengesetzten axialen Richtung umgesetzt wird.

2. Sanitärarmatur nach Anspruch 1, **dadurch gekennzeichnet, dass** in dem rohrförmigen Wasserabgang (9, 23; 109, 123; 209, 223) ein Einsatz (17; 117; 217) angeordnet ist, der einen den Ventilschaft (14; 114 ; 214) bereichsweise aufnehmenden Innenraum (20; 144; 244) und mindestens einen Teil des den Wasserweg im rohrförmigen Wasserabgang (9, 23; 109, 123; 209, 223) bildenden Wasserkanals (19; 150, 151; 219) enthält.

3. Sanitärarmatur nach Anspruch 2, **dadurch gekennzeichnet, dass** die bewegungsübertragende Einrichtung (261, 263, 264, 265) mindestens ein in einem Schlitz (260) des Einsatzes (217) gelagertes Zahnrad (261) umfasst, das einerseits mit einer mit dem Ventilschaft (214) verbundenen Zahnung (264) und andererseits mit einer mit dem Betätigungsorgan (225) verbundenen Zahnung (265) kämmt.

4. Sanitärarmatur nach Anspruch 3, **dadurch gekennzeichnet, dass** eine Mehrzahl von Zahnrädern (261) vorgesehen ist und dass zwischen den entsprechenden Schlitzen (260) des Einsatzes (217) jeweils mindestens ein Wasserkanal (219) verläuft.

## Claims

1. Sanitary fitting, having
a) a housing, in which a water inlet space is formed;
b) two water outlets, of which at least one is formed pipe-shaped and protrudes from the housing;
c) a switching device, with which the water flow from the water inlet space of the housing can selectively be guided to one of the water outlets and which comprises:
ca) a two-way valve cone, which, in a first end position, closes a first valve seat in the water path to the first water outlet and, in a second end position, closes a second valve seat in the water path to the second water outlet;
cb) a valve shaft, which is connected to the two-way valve cone;
cc) a manually operable actuating element, with which the valve shaft and thereby the two-way valve cone are movable in axial direction;
wherein
d) the actuating element (25; 125; 225) has a sleeve-shaped area (26; 126; 226), which is movably guided in axial direction on the outer lateral area of the pipe-shaped water outlet (9, 23; 109, 123; 209, 223);
e) a device (28, 29; 145, 146, 148, 149; 261, 263, 264, 265) is provided, with which a movement of the sleeve-shaped area (26; 126; 226) of the actuating element (25; 125; 225) is transferable to the two-way valve cone (15; 115; 215);
**characterized in that**
f) the movement transfering device (261, 263, 264, 265) is constructed such that a movement of the actuating element (225) in an axial direction is transformed in a movement of the two-way valve cone (215) in the opposite axial direction.

2. Sanitary fitting according to claim 1, **characterized in that** an insert (17; 117; 217) is arranged in the pipe-shaped water outlet (9, 23; 109, 123; 209, 223), wherein the insert (17; 117; 217) contains an interior space (20; 144; 244), which receives the valve shaft (14; 114; 214) in certain areas, and at least a part of the water channel (19; 150, 151; 219), which forms the water path in the pipe-shaped water outlet (9, 23; 109, 123; 209, 223).

3. Sanitary fitting according to claim 2, **characterized in that** the movement transfering device (261, 263, 264, 265) comprises at least one gearwheel (261) mounted in a slit (260) of the insert (217), wherein the gearwheel (261) intermeshes for one with a toothing (264) connected with the valve shaft (214) and for another with a toothing (265) connected with the actuating element (225).

4. Sanitary fitting according to claim 3, **characterized in that** a plurality of gearwheels (261) is provided and **in that** at least one water channel (219) extends between the corresponding slits (260) of the insert (217) respectively.

## Revendications

1. Robinetterie sanitaire comprenant
a) un corps dans lequel une chambre d'arrivée d'eau est ménagée ;
b) deux sorties d'eau, dont au moins l'une est de réalisation tubulaire et fait saillie au-delà dudit corps ;
c) un dispositif de commutation à l'aide duquel l'écoulement d'eau peut être sélectivement canalisé vers l'une des deux sorties d'eau, à partir de ladite chambre d'arrivée d'eau dudit corps, et qui inclut :
ca) un cône obturateur double qui obture, en un premier emplacement extrême, un premier siège de soupape sur le trajet emprunté par l'eau vers la première sortie d'eau et, en un second emplacement extrême, un second siège de soupape sur le trajet emprunté par l'eau vers la seconde sortie d'eau ;
cb) une tige de soupape reliée audit cône obturateur double ;
cc) un organe d'actionnement qui est manoeuvrable à la main et à l'aide duquel ladite tige de soupape, et associativement ledit cône obturateur double, peuvent être mus dans la direction axiale ;
sachant
d) que ledit organe d'actionnement (25 ; 125 ; 225) est muni d'une région (26 ; 126 ; 226) configurée en une douille et guidée à coulissement, dans la direction axiale, sur la surface de l'enveloppe extérieure de la sortie d'eau (9, 23 ; 109, 123 ; 209, 223) de forme tubulaire ;
e) qu'il est prévu un dispositif (28, 29 ; 145, 146, 148, 149 ; 261, 263, 264, 265) à l'aide duquel un mouvement de ladite région (26 ; 126 ; 226) dudit organe d'actionnement (25 ; 125 ; 225), configurée en une douille, peut être transmis au cône obturateur double (15 ; 115 ; 215),
**caractérisée par le fait que**
f) le dispositif (261, 263, 264, 265) transmetteur de mouvements est réalisé de façon telle qu'un mouvement de l'organe d'actionnement (225), dans une direction axiale, soit converti en un mouvement du cône obturateur double (215) s'opérant en sens inverse dans ladite direction axiale.

2. Robinetterie sanitaire selon la revendication 1, **caractérisée par le fait qu'**une pièce intégrée (17 ; 117 ; 217), logée dans la sortie d'eau (9, 23 ; 109, 123 ; 209, 223) de forme tubulaire, renferme un compartiment intérieur (20 ; 144 ; 244) recevant, par zones, la tige de soupape (14 ; 114 ; 214), et au moins une partie du canal (19; 150, 151 ; 219) de circulation d'eau qui forme le trajet emprunté par l'eau dans ladite sortie d'eau (9, 23 ; 109, 123 ; 209, 223) de forme tubulaire.

3. Robinetterie sanitaire selon la revendication 2, **caractérisée par le fait que** le dispositif (261, 263, 264, 265) transmetteur de mouvements est pourvu d'au moins une roue dentée (261) qui, montée dans une fente (260) de la pièce intégrée (217), engrène d'une part dans une denture (264) reliée à la tige de soupape (214) et, d'autre part, dans une denture (265) reliée à l'organe d'actionnement (225).

4. Robinetterie sanitaire selon la revendication 3, **caractérisée par le fait qu'**il est prévu une pluralité de roues dentées (261) ; et **par le fait qu'**au moins un canal (219) de circulation d'eau s'étend, à chaque fois, entre les fentes correspondantes (260) de la pièce intégrée (217).
